# EUROPÄISCHE PATENTANMELDUNG

(11) **EP 2 818 641 A1**
(43) Veröffentlichungstag der Anmeldung: **31.12.2014**
(21) Anmeldenummer: 13173717.3
(22) Anmeldetag: 26.06.2013
(51) Int. Cl.: F01D 11/00

(54) **Turbinenschaufel mit gestufter und abgeschrägter Plattformkante**

(71) Anmelder: Siemens Aktiengesellschaft, 80333 München (DE)
(72) Erfinder: Ahmad, Fathi, 41564 Kaarst (DE); Kurt, Nihal, 40231 Düsseldorf (DE); Müsgen, Ralf, 45147 Essen (DE); Schumann, Eckart, dr., 45468 Mülheim an der Ruhr (DE)

(57) **Zusammenfassung**

Es wird eine Turbinenschaufel (1) beschrieben, welche ein Schaufelblatt (3) und eine Plattform (2) mit einer oberen Oberfläche (4), auf der das Schaufelblatt (3) angeordnet ist, und mindestens eine Seitenfläche (8) umfasst, wobei die Seitenfläche (8) einen Schlitz (10) zum Einfügen eines Dichtungsstreifens umfasst. Der Übergang zwischen der oberen Oberfläche (4) der Plattform (2) und der mindestens einen Seitenfläche (8) umfasst einen gestuften Bereich (13) und einen abgeschrägten Bereich (14).

## Beschreibung

### Gegenstand der Erfindung

Die vorliegende Erfindung betrifft eine Turbinenschaufel, beispielsweise eine Leitschaufel oder eine Laufschaufel einer Gasturbine oder einer Dampfturbine. Die Erfindung betrifft weiterhin ein Verfahren zur Herstellung einer solchen Turbinenschaufel und einer Turbine.

### Hintergrund der Erfindung

Die Turbinenschaufeln von Gasturbinen oder Dampfturbinen sind typischerweise starken mechanischen, chemischen und thermischen Belastungen ausgesetzt. Aus diesem Grund werden die Oberflächen der jeweiligen Schaufelblätter und die den genannten Belastungen ebenfalls ausgesetzten Oberflächen der Schaufelplattformen mit geeigneten Beschichtungen versehen. Ein solches Beschichtungssystem umfasst beispielsweise eine sogenannte Haftschicht (bond coat) und eine thermische Schutzbeschichtung (thermal barrier coating - TBC).

Das Schaufelblatt einer Turbinenschaufel ist in der Regel auf einer sogenannten Plattform angeordnet. Die Plattform und der darunter angeordnete Schaufelfuß dienen dazu, die Turbinenschaufel auf einem Halterungsbauteil, zum Beispiel einer Rotorscheibe (rotor disc) oder einem Ring oder Schaufelring anzuordnen und zu befestigen. In diesem Zusammenhang ist es unerwünscht, wenn Beschichtungsmaterial in Folge der Beschichtung des Schaufelblattes und der Oberfläche der Plattform über die Kante der Plattform hinausragt und sich insbesondere an der Seitenfläche der Plattform befindet. Entsprechende Verunreinigungen der Seitenflächen der Plattform würden ein präzises Anordnen der Turbinenschaufel an dem Halterungsbauteil, zum Beispiel an der Rotorscheibe oder an einem Ring, erschweren und könnten darüber hinaus zu unerwünschten mechanischen Effekten oder Leckströmen führen.

Die Beschichtung des Schaufelblattes und der Oberfläche der Plattform erfolgt vorzugsweise durch Aufsprühen des Beschichtungsmaterials. Ein mögliches Übersprühen der Plattformränder von Turbinenschaufeln, beispielsweise Leitschaufeln oder Laufschaufeln, ist nicht akzeptabel, sodass aus den oben genannten Gründen Beschichtungsmaterial, welches über den Plattformrand gelangt ist, manuell entfernt werden muss, beispielsweise abgeschliffen werden muss. Dies verursacht erhöhte Kosten, zusätzlichen Zeitverlust im Rahmen des Herstellungsprozesses und unter Umständen unerwünschte Abweichungen in der Dimension der jeweiligen Turbinenschaufel.

Um die beschriebene Nachbearbeitung der Plattformen zu vermeiden, werden teilweise die Randkanten der oberen Oberfläche der Plattform durch Ausnehmungen zurück gesetzt, sodass der Übergang zwischen der oberen Plattformoberfläche und der Seitenfläche der Plattform stufenförmig ausgestaltet ist. Eine derartige Stufe oder Ausnehmung hat üblicherweise eine Höhe von 4 mm.

An der Seitenfläche der Plattform in der Regel ein Schlitz für einen Dichtungsstreifen angeordnet. Der Schlitz umfasst einen oberen und einen unteren Rand. Da die Plattform von Laufschaufeln oder Leitschaufeln in Richtung der an die Turbine angeschlossenen Arbeitsmaschine bzw. in Hauptströmungsrichtung dünner wird, was der Kontur des Heißgasströmungskanals geschuldet ist, besteht das Risiko, das durch die beschriebene Stufe oder Ausnehmung der obere Rand kontinuierlich dünner wird und unter Umständen verschwindet. Der obere Rand des Dichtungsschlitzes ist aber erforderlich, um ein Einsprühen von Beschichtungsmaterial in den Schlitz selbst zu verhindern.

### Beschreibung der Erfindung

Vor diesem Hintergrund ist es eine erste Aufgabe der vorliegenden Erfindung, eine vorteilhafte Turbinenschaufel zur Verfügung zu stellen. Eine zweite Aufgabe besteht darin, eine vorteilhafte Turbine zur Verfügung zu stellen. Eine dritte Aufgabe der vorliegenden Erfindung besteht darin, ein vorteilhaftes Verfahren zur Herstellung einer Turbinenschaufel zur Verfügung zu stellen.

Die erste Aufgabe wird durch eine Turbinenschaufel nach Anspruch 1 gelöst. Die zweite Aufgabe wird durch eine Turbine nach Anspruch 8 gelöst. Die dritte Aufgabe wird durch ein Verfahren zur Herstellung einer Turbinenschaufel nach Anspruch 10 gelöst. Die abhängigen Ansprüche enthalten weitere, vorteilhafte Ausgestaltungen der vorliegenden Erfindung.

Die erfindungsgemäße Turbinenschaufel umfasst ein Schaufelblatt und eine Plattform. Die Plattform umfasst eine obere Oberfläche, auf der das Schaufelblatt angeordnet ist. Die Plattform umfasst weiterhin mindestens eine Seitenfläche. Die Seitenfläche umfasst einen Schlitz zum Einfügen bzw. Aufnehmen eines Dichtungsstreifens. Der Übergang zwischen der oberen Oberfläche der Plattform und der Seitenfläche umfasst einen gestuften Bereich und einen abgeschrägten Bereich.

Die in dem Rohling für die Plattform zunächst vorhandene Kante zwischen der oberen Oberfläche der Plattform und der Seitenfläche wurde also im Rahmen der Herstellung der Turbinenschaufel in einem ersten Bereich in der Form einer Stufe oder Kerbe oder Kerbe oder in Form eines Rücksprungs oder einer Ausnehmung ausgestaltet. In einem zweiten Bereich wurde die ursprüngliche Kante in der Form einer Abschrägung oder Abkantung oder Fase ausgestaltet.

Vorzugsweise sind der gestufte Bereich und der abgeschrägte Bereich in einer Längsrichtung der Turbinenschaufel hintereinander angeordnet. Die Turbinenschaufel kann eine Vorderseite und eine Rückseite umfassen. Dabei ist die Vorderseite die Seite, an welcher auf der Plattform die Anströmkante des Schaufelblattes angeordnet ist und die Rückseite die Seite ist, an welcher die Abströmkante des Schaufelblattes angeordnet ist. In Richtung von der Vorderseite zur Rückseite der Turbinenschaufel ist der gestufte Bereich vorzugsweise vor dem abgeschrägten Bereich angeordnet.

Die erfindungsgemäße Turbinenschaufel hat den Vorteil, dass die im Zusammenhang mit einer durchgehend gestuften Ausgestaltung der Kante der Plattform sich ergebenden Nachteile vermieden werden. Insbesondere bleibt der obere Rand des Dichtungsschlitzes erhalten und büßt insbesondere seine Stabilität nicht ein.

Bei der erfindungsgemäßen Turbinenschaufel handelt es sich vorteilhafterweise um eine Laufschaufel oder eine Leitschaufel, beispielsweise eine Laufschaufel oder eine Leitschaufel einer Gasturbine oder einer Dampfturbine.

Die Plattform kann beispielsweise zwei Seitenflächen, eine Vorderseite und eine Rückseite umfassen. Dabei ist der gestufte Bereich zwischen der Vorderseite und dem abgeschrägten Bereich angeordnet und der abgeschrägte Bereich zwischen dem gestuften Bereich und der Rückseite angeordnet. Zwischen bedeutet dabei in einer Richtung parallel zu der jeweiligen Seitenkante bzw. parallel zur Längsrichtung der jeweiligen Seitenfläche. Vorzugsweise sind beide Seitenflächen der Plattform wie beschrieben mit einem gestuften Bereich und einem abgeschrägten Bereich ausgestaltet.

Darüber hinaus kann die Plattform einen Übergangsbereich umfassen, der zwischen dem gestuften Bereich und dem abgeschrägten Bereich angeordnet ist und in welchem der gestufte Bereich in den abgeschrägten Bereich überführt wird. Vorzugsweise wird in dem Übergangsbereich der gestufte Bereich kontinuierlich in den abgeschrägten Bereich überführt. Ein kontinuierliches Überführen des gestuften Bereichs in den abgeschrägten Bereich hat den Vorteil, dass die Turbinenschaufel leicht zu montieren ist und unerwünschte Verkantungen in der Halterung, beispielsweise in der Rotorscheibe, vermieden werden.

Der gestufte Bereich hat vorzugsweise eine Stufe mit einer Höhe zwischen 2 mm und 6 mm, beispielsweise zwischen 3,5 mm und 4,5 mm, bevorzugt 4 mm. Die Stufe kann darüber hinaus eine Tiefe zwischen 0,4 mm und 8 mm, beispielsweise zwischen 0,5 mm und 7 mm, bevorzugt 6 mm aufweisen.

Vorteilhafterweise ist der abgeschrägte Bereich in einer parallel zur Seitenfläche verlaufenden Längsrichtung zwischen der Rückseite der Plattform und dem Schaufelblatt angeordnet. Das heißt, in einer Projektion der Position des Schaufelblatts auf eine entlang der Seitenfläche verlaufende Achse ist der abgeschrägte Bereich auf dieser Achse zwischen der Rückseite der Plattform und dem Schaufelblatt, insbesondere der Abströmkante des Schaufelblattes, angeordnet. Dies hat den Vorteil, dass der Bereich der Plattform, in welchem die Dicke der Plattform am geringsten ist, mit einer abgeschrägten Kante ausgestaltet ist. Dadurch bleibt der Schlitz für den Dichtungsstreifen im Hinblick auf seine Funktion und Stabilität erhalten bleibt.

Vorteilhafterweise nimmt die Höhe bzw. Dicke der Plattform von der Abströmkante des Schaufelblattes zur Rückseite der Plattform hin ab. Vorzugsweise nimmt die Dicke bzw. Höhe der Plattform an dem abgeschrägten Bereich zur Rückseite der Plattform hin ab. Die Abnahme erfolgt vorteilhafterweise kontinuierlich.

Die erfindungsgemäße Turbinenschaufel hat den Vorteil, dass im Anschluss an die Beschichtung unter Umständen erforderliche Nacharbeiten reduziert werden bzw. vermieden werden. Gleichzeitig werden die in Folge der zusätzlichen Bearbeitung der Plattform in Folge eines Übersprühens von Beschichtungsmaterial verursachten Abweichungen in der Geometrie bzw. Dimension der Plattform reduziert oder komplett vermieden. Darüber hinaus ist die erfindungsgemäße Turbinenschaufel servicefreundlich. Sie verursacht weniger Schwierigkeiten in Bezug auf Erosionen und Korrosionen bei der Wiederaufarbeitung. Grundsätzlich ist die Verbindung eines abgeschrägten Bereichs mit einem gestuften Bereich sowohl für Leitschaufeln als auch für Laufschaufeln anwendbar.

Die erfindungsgemäße Turbine umfasst eine zuvor beschriebene Turbinenschaufel. Sie hat grundsätzlich dieselben Vorteile wie die zuvor beschriebene Turbinenschaufel. Bei der erfindungsgemäßen Turbine kann es sich beispielsweise um eine Gasturbine oder eine Dampfturbine handeln.

Das erfindungsgemäße Verfahren zum Herstellen einer zuvor beschriebenen erfindungsgemäßen Turbinenschaufel zeichnet sich dadurch aus, dass der gestufte Bereich und/oder der abgeschrägte Bereich und/oder der Übergangsbereich zwischen dem gestuften Bereich und dem abgeschrägten Bereich durch Funkenerodieren (EDM-electrical discharge machining) von der Plattform abgetragen wird. Das erfindungsgemäße Verfahren hat den Vorteil, dass auf einfacher Weise die für die erfindungsgemäße Turbinenschaufel charakteristische Geometrie der Plattform erzeugt werden kann.

Die für die erfindungsgemäße Turbinenschaufel charakteristische Geometrie des gestuften Bereichs und/oder des abgeschrägten Bereichs kann vorzugsweise in eine im Rahmen der Herstellung der Turbinenschaufel verwendete Elektrode, beispielsweise Graphitelektrode, implementiert werden. Grundsätzlich kann zum Beispiel der gestufte Bereich und/oder der abgeschrägte Bereich und/oder der Übergangsbereich im Zusammenhang mit dem Herausarbeiten des Schlitzes für den Dichtungsstreifen ebenfalls aus dem Plattformrohling herausgearbeitet werden. Dies bietet sich insbesondere bei Leitschaufeln an.

Weiterhin kann die verwendete Elektrode beispielsweise durch Fräsen hergestellt werden. Insbesondere bei Laufschaufeln bietet es sich an, die zu verwendende Elektrode durch ein 5-Achsen-Fräsen herzustellen.

### Beschreibung von Ausführungsbeispielen

Weitere Merkmale, Eigenschaften und Vorteile der vorliegenden Erfindung werden im Folgenden anhand eines Ausführungsbeispiels unter Bezugnahme auf die beigefügte Figur näher beschrieben. Alle bisher und im Folgenden beschriebenen Merkmale sind dabei sowohl einzeln als auch in einer beliebigen Kombination miteinander vorteilhaft. Das im Folgenden beschriebene Ausführungsbeispiel stellt lediglich ein Beispiel dar, welches den Gegenstand der Erfindung jedoch nicht beschränkt.
- Figur 1: zeigt schematisch einen Schnitt durch einen Teil einer Turbinenschaufel.
- Figur 2: zeigt schematisch einen Teilbereich einer Leitschaufel in perspektivischer Ansicht.
- Figur 3: zeigt schematisch einen Teilbereich einer Leitschaufel in perspektivischer Ansicht.
- Figur 4: zeigt schematisch eine Gasturbine.

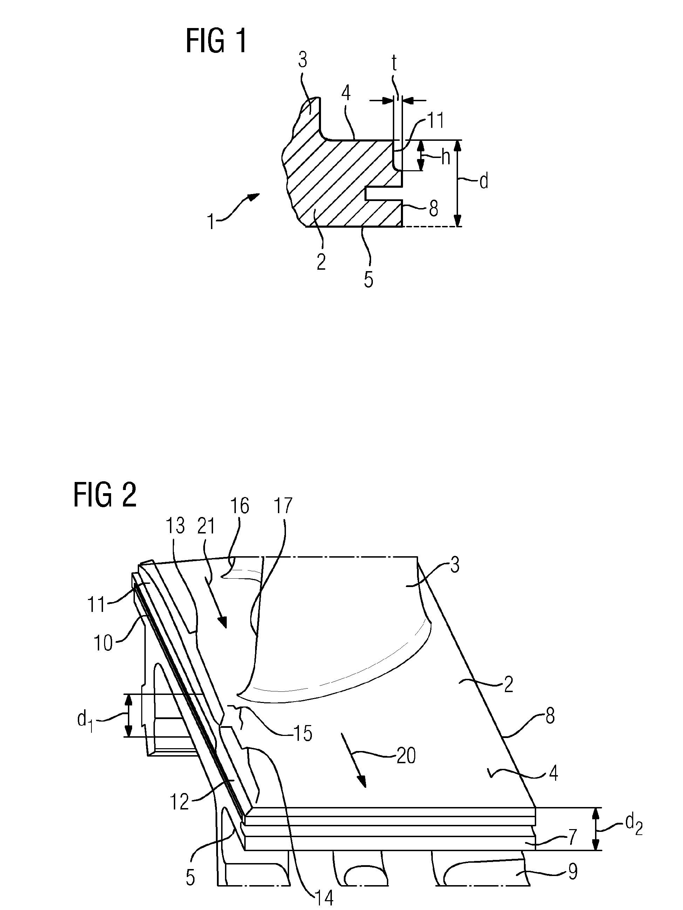

Die Figur 1 zeigt schematisch einen Schnitt durch einen Teil einer Turbinenschaufel 1. Bei der in der Figur 1 gezeigten Turbinenschaufel 1 kann es sich beispielsweise um eine Leitschaufel 117 oder eine Laufschaufel 115 handeln. Die Figur 1 zeigt schematisch einen Teil der Plattform 2 und einen Teil des Schaufelblattes 3. Die Plattform 2 umfasst eine obere Oberfläche 4, eine untere Oberfläche 5, eine Vorderseite 6, eine Rückseite 7 und zwei Seitenflächen 8. Auf der Oberseite 4 bzw. auf der oberen Oberfläche der Plattform 2 ist das Schaufelblatt 3 angeordnet. An die untere Oberfläche 5 bzw. Unterseite der Plattform 2 schließt sich ein Schaufelfuß 9 an.

Die Seitenfläche 8 umfasst einen Schlitz 10 zum Einfügen eines Dichtungsstreifens. Der Dichtungsstreifen dient zum Abdichten des Zwischenraums zwischen zwei benachbarten Turbinenschaufeln 1.

Sowohl das Schaufelblatt 3, als auch die obere Oberfläche 4 der Plattform 2 werden mit einer Haftschicht und einer thermischen Schutzschicht beschichtet. Dies erfolgt typischerweise durch Aufsprühen des Beschichtungsmaterials. Um ein Übersprühen des Beschichtungsmaterials von der oberen Oberfläche auf die Seitenfläche zu verhindern, ist der Übergang von der oberen Oberfläche 4 zur Seitenfläche 8 in Form einer Stufe 11 ausgestaltet. Dies bewirkt, dass ein Übersprühen des gestuften Bereichs 11 unschädlich ist und insbesondere keine Nachbearbeitung der Plattform 2 erforderlich macht. Darüber hinaus ist der Bereich der Seitenfläche 8 unterhalb der Stufe 11 oder Ausnehmung oder Kerbe vor einem unerwünschten Besprühen mit Beschichtungsmaterial wirksam geschützt.

Die Stufe 11 hat eine Höhe h von 4,0 ± 0,5 mm und eine Tiefe t von 0,6 ± 0,1 mm.

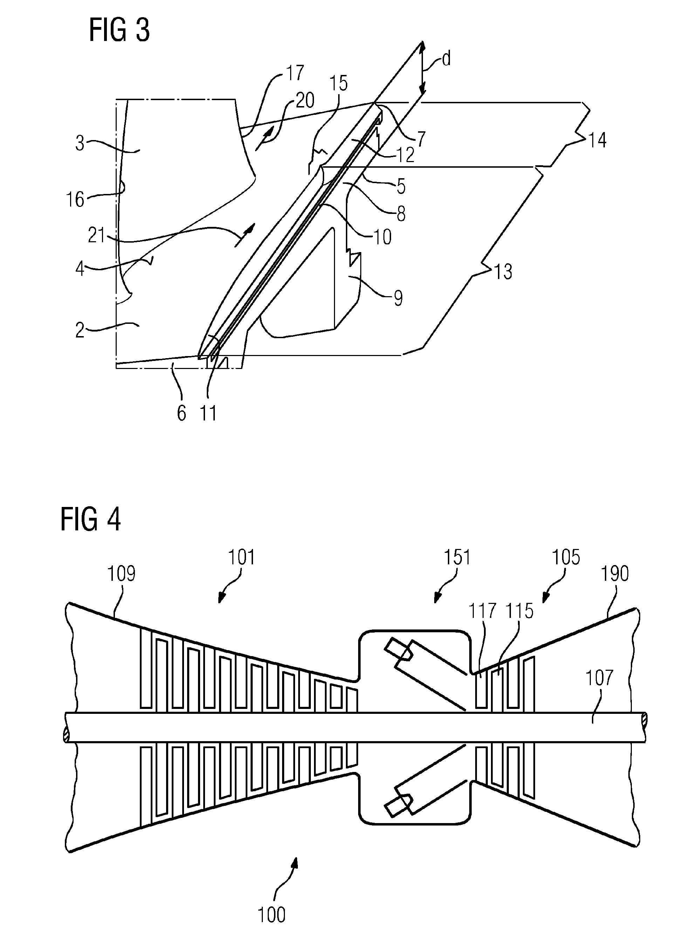

Die Figuren 2 und 3 zeigen schematisch einen Teilbereich einer Leitschaufel 117 in perspektivischer Ansicht. Die Leitschaufel 117 umfasst ein Schaufelblatt 3, eine Plattform 2 und einen Schaufelfuß 9. Das Schaufelblatt 3 ist auf der Plattform 2 angeordnet. Es umfasst eine Anströmkante 16 und eine Abströmkante 17. Die Plattform 2 umfasst zwei Seitenflächen 8. An jeder Seitenfläche 8 ist ein Schlitz 10 zum Einfügen eines Dichtungsrings angeordnet.
Die Dicke oder Höhe d der Plattform 2 nimmt in Hauptströmungsrichtung 20 des Heißgases bzw. in einer Längsrichtung 21, die parallel zur einer der Seitenflächen 8 verläuft, zumindest von der Abströmkante 17 des Schaufelblattes 3 zur Rückseite 7 der Plattform 2 hin ab, vorzugsweise kontinuierlich. In der Figur 2 ist zum Beispiel die Dicke oder Höhe d₁ der Plattform 2 hinter der Abströmkante 17 größer als die Dicke oder Höhe d₂ der Plattform 2 an der Rückseite 7.

Zwischen der Vorderseite 6 der Plattform 2 und der Rückseite 7 der Plattform 2 ist entlang der Seitenfläche 8 oberhalb des Schlitzes 10 für den Dichtungsring ein gestufter Bereich 13 und daran anschließend ein abgeschrägter Bereich 14 angeordnet. Der gestufte Bereich 13 beginnt an der Vorderseite 6 der Plattform 2 und erstreckt sich bis hinter die Abströmkante 17 des Schaufelblattes 3 in Bezug auf die Längsrichtung 21. Der abgeschrägte Bereich 14 erstreckt sich von dem gestuften Bereich 13 bis zur Rückseite 7 der Plattform 2.

Zwischen dem gestuften Bereich 13 und dem abgeschrägten Bereich 14 befindet sich ein Übergangsbereich 15. In dem Übergangsbereich 15 wird die Geometrie des gestuften Bereichs 13 kontinuierlich in die Geometrie des abgeschrägten Bereichs 14 überführt.

Der gestufte Bereich 13 weist vorzugsweise eine Stufe 11 mit einer Höhe zwischen 2 mm und 6 mm, zum Bespiel 3,5 mm bis 4,5 mm, vorzugsweise 4 mm auf. Die Stufe 11 hat vorzugsweise eine Tiefe t zwischen 0,4 mm und 0,8 mm, zum Beispiel zwischen 0,5 mm und 0,7 mm, bevorzugt 0,6 mm.

Die Figur 4 zeigt schematisch eine Gasturbine. Eine Gasturbine weist im Inneren einen um eine Rotationsachse drehgelagerten Rotor mit einer Welle 107 auf, der auch als Turbinenläufer bezeichnet wird. Entlang des Rotors folgen aufeinander ein Ansauggehäuse 109, ein Verdichter 101, eine Brenneranordnung 15, eine Turbine 105 und das Abgasgehäuse 190.

Die Brenneranordnung 15 kommuniziert mit einem beispielsweise ringförmigen Heißgaskanal. Dort bilden mehrere hintereinander geschaltete Turbinenstufen die Turbine 105. Jede Turbinenstufe ist aus Schaufelringen gebildet. In Strömungsrichtung eines Arbeitsmediums gesehen folgt im Heißgaskanal einer Leitschaufelreihe 117 eine aus Laufschaufeln 115 gebildete Reihe. Die Leitschaufeln 117 sind dabei an einem Innengehäuse eines Stators befestigt, wohingegen die Laufschaufeln 115 einer Reihe beispielsweise mittels einer Turbinenscheibe am Rotor angebracht sind. An dem Rotor angekoppelt ist ein Generator oder eine Arbeitsmaschine.

Während des Betriebes der Gasturbine wird vom Verdichter 101 durch das Ansauggehäuse 109 Luft angesaugt und verdichtet. Die am turbinenseitigen Ende des Verdichters 101 bereitgestellte verdichtete Luft wird zu den Brenneranordnungen 15 geführt und dort mit einem Brennstoff vermischt. Das Gemisch wird dann unter Bildung des Arbeitsmediums in der Brennkammer verbrannt. Von dort aus strömt das Arbeitsmedium entlang des Heißgaskanals an den Leitschaufeln 117 und den Laufschaufeln 115 vorbei. An den Laufschaufeln 115 entspannt sich das Arbeitsmedium impulsübertragend, so dass die Laufschaufeln 115 den Rotor antreiben und dieser die an ihn angekoppelte Arbeitsmaschine.

## Patentansprüche

1. Turbinenschaufel (1), welche ein Schaufelblatt (3) und eine Plattform (2) mit einer oberen Oberfläche (4), auf der das Schaufelblatt (3) angeordnet ist, und mindestens eine Seitenfläche (8) umfasst, wobei die Seitenfläche (8) einen Schlitz (10) zum Einfügen eines Dichtungsstreifens umfasst,
**dadurch gekennzeichnet, dass**
der Übergang zwischen der oberen Oberfläche (4) der Plattform (2) und der mindestens einen Seitenfläche (8) einen gestuften Bereich (13) und einen abgeschrägten Bereich (14) umfasst.

2. Turbinenschaufel (1) nach Anspruch 1,
**dadurch gekennzeichnet, dass**
es sich bei der Turbinenschaufel (1) um eine Laufschaufel (115) oder eine Leitschaufel (117) handelt.

3. Turbinenschaufel (1) nach Anspruch 1 oder Anspruch 2,
**dadurch gekennzeichnet, dass**
die Plattform (2) zwei Seitenflächen (8), eine Vorderseite (6) und eine Rückseite (7), wobei der gestufte Bereich (13) zwischen der Vorderseite (6) und dem abgeschrägten Bereich (14) angeordnet ist und der abgeschrägte Bereich (14) zwischen dem gestuften Bereich (13) und der Rückseite (7) angeordnet ist.

4. Turbinenschaufel (1) nach einem der Ansprüche 1 bis 3,
**dadurch gekennzeichnet, dass**
die Plattform (2) einen Übergangsbereich (15) umfasst, der zwischen dem gestuften Bereich (13) und dem abgeschrägten Bereich (14) angeordnet ist und in welchen der gestufte Bereich (13) in den abgeschrägten Bereich (14) überführt wird.

5. Turbinenschaufel (1) nach einem der Ansprüche 1 bis 4,
**dadurch gekennzeichnet, dass**
der gestufte Bereich (13) eine Stufe (11) mit einer Höhe zwischen 2mm und 6mm und/oder einer Tiefe zwischen 0,4mm und 0,8mm umfasst.

6. Turbinenschaufel (1) nach einem der Ansprüche 1 bis 5,
**dadurch gekennzeichnet, dass**
der abgeschrägte Bereich (14) in einer parallel zur Seitenfläche (8) verlaufenden Längsrichtung (21) zwischen der Rückseite (7) der Plattform (2) und dem Schaufelblatt (3) angeordnet ist.

7. Turbinenschaufel (1) nach einem der Ansprüche 1 bis 6,
**dadurch gekennzeichnet, dass**
die Höhe der Plattform (2) zur Rückseite (7) der Plattform (2) hin abnimmt.

8. Turbine, welche eine Turbinenschaufel (1) nach einem der Ansprüche 1 bis 7 umfasst.

9. Turbine nach Anspruch 8,
**dadurch gekennzeichnet, dass**
es sich bei der Turbine um eine Gasturbine oder eine Dampfturbine handelt.

10. Verfahren zum Herstellen einer Turbinenschaufel (1) nach einem der Ansprüche 1 bis 7,
**dadurch gekennzeichnet, dass**
der gestufte Bereich (13) und/oder der abgeschrägte Bereich (14) und/oder der Übergangsbereich (15) zwischen dem gestuften Bereich (13) und dem abgeschrägten Bereich (14) durch Funkenerodieren (EDM - Electrical Discharge Machining) von der Plattform (2) abgetragen wird.

11. Verfahren nach Anspruch 10,
**dadurch gekennzeichnet, dass**
der gestufte Bereich (13) und/oder der abgeschrägte Bereich (14) und/oder der Übergangsbereich (15) zwischen dem gestuften Bereich (13) und dem abgeschrägten Bereich (14) während des Herausarbeitens des Schlitzes für den Dichtungsstreifen herausgearbeitet wird.
